# EUROPÄISCHE PATENTSCHRIFT

(11) **EP 3 811 431 B1**
(45) Veröffentlichungstag und Bekanntmachung des Hinweises auf die Patenterteilung: **20.08.2025**
(21) Anmeldenummer: 19732921.2
(22) Anmeldetag: 07.06.2019
(51) Int. Cl.: H01M 10/658, H01M 50/204, H01M 50/222, H01M 50/231, H01M 50/24, H01M 50/342

(54) **FAHRZEUG MIT EINEM HOCHVOLTSPEICHER**
VEHICLE WITH A HIGH-VOLTAGE ACCUMULATOR
VÉHICULE MUNI D'UN ACCUMULATEUR HAUTE TENSION

(30) Priorität: 21.06.2018 DE 102018210151
(43) Veröffentlichungstag der Anmeldung: 28.04.2021
(73) Patentinhaber: Bayerische Motoren Werke Aktiengesellschaft, 80809 München (DE)
(72) Erfinder: LUSTIG, Robert, 81927 München (DE); RAETTICH, Philip, 87651 Bidingen (DE); SCHMIEG, Tobias, 85774 Unterföhring (DE); TENFELDE, Frank, 80333 München (DE)
(86) Internationale Anmeldenummer: PCT/EP2019/064909
(87) Internationale Veröffentlichungsnummer: WO 2019/243079

(56) Entgegenhaltungen:
- EP-A2- 2 244 318
- WO-A1-2013/110406
- DE-B3- 102016 215 131

## Beschreibung

Die vorliegende Erfindung betrifft ein Fahrzeug mit einem Hochvoltspeicher gemäß dem Oberbegriff des Patentanspruches 1.

Aus der DE 10 2016 215 131 B3 ist ein elektrischer Akkumulator bekannt, der in einem Gehäuse angeordnet ist, wobei an einer Innenseite des Gehäuses und/oder an einer Oberfläche des Akkumulators ein intumeszierendes Klebeband vorgesehen ist.

Die EP 2 244 318 A2 zeigt ein Wärmemanagementsystem für Batteriepakete, bestehend aus einem Batteriepaketgehäuse zum Aufnehmen mehrerer Batterien, welches aus einem Hochtemperaturmaterial besteht. Außerdem weist das Wärmemanagementsystem in einer Wand des Batteriepaketgehäuses einen Notentgasungsanschluss zum Ablassen von heißem Gas aus dem Inneren des Batteriepaketgehäuses auf.

Aus der WO 2013/ 110 406 A1 ist ein Batteriemodul mit einem Gehäuse bekannt, in dem zumindest eine Batteriezelle angeordnet ist, wobei das Gehäuse vollständig mit einer wärmedämmenden Schicht versehen ist. Es wird vorteilhafterweise der Innenraum des Gehäuses und damit die Batteriezellen vor der Umgebungstemperatur geschützt, so dass eine stabile Temperatur über längere Zeit im Innenraum des Batteriemoduls gehalten werden kann.

Hochvoltspeicher von Elektro- bzw. Hybridfahrzeugen, wie z. B. dem Fahrzeug "BMW i3", weisen ein Hochvoltspeichergehäuse mit mehreren darin angeordneten sogenannten "Zellmodulen" (im Folgenden auch als "Batteriemodule" bezeichnet). auf. Jedes der Zellmodule bzw. Batteriemodule besteht aus mehreren in einer Reihe hintereinander angeordneten Batteriezellen, die elektrisch miteinander verschaltet sind. Die elektrische Verschaltung der einzelnen Batteriezellen erfolgt über ein sogenanntes "Zellkontaktierungssystem". Je nachdem, ob die Batteriezellen eines Zellmoduls seriell oder parallel miteinander verschaltet sind, sind über das Zellkontaktierungssystem gleichnamige oder ungleichnamige Pole der Batteriezellen eines Zielmoduls elektrisch miteinander verbunden.

Die einzelnen Batteriezellen weisen jeweils ein Batteriezellgehäuse auf. In jedem der Batteriezellgehäuse ist eine Notentgasungsöffnung vorgesehen. Sollten, z. B. bei einem extrem starken Unfall, Batteriezellen beschädigt werden und/oder ein Kurzschluss in oder zwischen einzelnen Batteriezellen entstehen und sich das Innere einer Batteriezelle unzulässig stark aufheizen, muss eine "Notentgasung" der betroffenen Batteriezellen möglich sein. Die Notentgasung erfolgt über die Notentgasungsöffnung, die z. B. als Sollbruchstelle ausgebildet sein kann, welche sich bei Überschreiten eines vorgegebenen Zellinnendrucks öffnet und ein Entweichen von Gas aus dem Inneren der Batteriezelle ermöglicht. In Extremfällen, wie z. B. bei einer massiven Beschädigung einzelner Batteriezellen, kann in sehr ungünstigen Konstellationen das austretende Gas entflammen, wobei ein Austritt von Flammen in die Umgebung oder in die Fahrgastzelle des Fahrzeugs mit hoher Sicherheit dadurch verhindert wird, dass die Batteriezellen bzw. die Zellmodule in einem Hochvoltspeichergehäuse angeordnet sind. Das Hochvoltspeichergehäuse des oben bereits erwähnten "BMW i3" ist ein relativ steifes Aluminiumgehäuse, das "noch oben hin", d. h. in Richtung zur Fahrgastzelle hin, durch einen aufgeschraubten Deckel verschlossen ist.

Aufgabe er Erfindung ist es, ein Fahrzeug mit einem Hochvoltspeicher zu schaffen, der im Vergleich zu Fahrzeugen mit herkömmlichen Hochvoltspeichern eine noch größere Sicherheit in Bezug auf eventuelle Brandgefahren bietet.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist die Überlegung, dass bei extremen mechanischen Beschädigungen einzelner Batteriezellen und/oder zellinternen Kurzschlüsse sehr heißes, brennendes Gas aus dem Inneren einzelener Batteriezellen in das Innere des Hochvoltspeichers über Notentgasungsöffnungen der Batteriezellgehäuse austreten können soll.

Ausgangspunkt der Erfindung ist ein Fahrzeug mit einem Hochvoltspeicher, der ein Gehäuse "Hochvoltspeichergehäuse" und mindestens ein in dem Gehäuse angeordnetes Zellmodul (im Folgenden auch als "Batteriemodul" bezeichnet) aufweist. Das Zellmodul bzw. Batteriemodul wiederum weist mehrere über ein Zellkontaktierungssystem elektrisch miteinander verbundene Batteriezellen auf. Die einzelnen Batteriezellen weisen jeweils ein Batteriezellgehäuse mit einer sich ab einem vorgegebenen Zellinnendruck öffnenden Notentgasungsöffnung auf. Es kann vorgesehen sein, dass das Zellkontaktierungssystem die Notentgasungsöffnungen der Batteriezellen des betreffenden Zellmoduls ganz oder zumindest teilweise überdeckt. Durch die Notentgasungsöffnungen kann bei einer Störung oder Beschädigung einzelner Batteriezellen heißes oder brennendes Gas aus dem Inneren der Batteriezellgehäuse in das Innere des Hochvoltspeichergehäuses entweichen. Die Notentgasungsöffnungen sind dem Zellkontaktierungssystem und/oder einer Wandung des Gehäuses zugewandt.

Der Kern der Erfindung besteht darin, dass das Zellkontaktierungssystem, vorzugsweise auch die Wandung des Gehäuses des Hochvoltspeichers, zumindest in denjenigen Bereichen, in denen die Notentgasungsöffnungen angeordnet sind, mit einer Hitzeschutzschicht, insbesondere mit einer Hitzeschutzlackschicht, versehen ist oder sind. Dadurch wird verhindert, dass heißes oder brennendes, aus einer oder mehreren Batteriezellen über die Notentgasungsöffnung bzw. die Notentgasungsöffnungen austretendes Gas unmittelbar auf die Wandung des Gehäuses des Hochvoltspeichers auftrifft. Heißes oder brennendes Gas trifft also zunächst auf die Hitzeschutzschicht auf, die an dem Zellkontaktierungssystem vorgesehen ist, vorzugsweise auch auf die Hitzeschutzschicht, die im Bereich der Notentgasungsöffnungen an der Innenseite der Wandung des Gehäuses des Hochvoltspeichers vorgesehen ist. Dadurch wird selbst bei sehr hohen Temperaturen des austretenden Gases (z. B. Temperaturen von mehr als 1000°C) zumindest für eine vorgegebene Zeitdauer verhindert, dass sich heißes Gas durch die Wandung des Gehäuses des Hochvoltspeichers hindurchbrennt und aus dem Hochvoltspeichergehäuse austritt. Dies trägt zu einer weiteren Verbesserung der Fahrgastsicherheit bei elektrifizierten Fahrzeugen bei. Ein Flammenaustritt aus dem Hochvoltspeichergehäuse kann somit mit noch höherer Sicherheit verhindert werden.

Das Aufbringen einer Hitzeschutzschicht auf das Zellkontaktierungssystem und die Innenwandung des Gehäuses des Hochvoltspeichers im Bereich der Notentgasungsöffnungen ist kostengünstig, gut industrialisierbar und nur mit einem sehr geringen Zusatzgewicht verbunden.

Mit der Erfindung wird also eine direkte Beaufschlagung der Batteriewandung verhindert. Der Begriff "Wandung" des Gehäuses des Hochvoltspeichers bzw. der Begriff "Batteriewandung" ist äußerst breit zu verstehen. Prinzipiell kann es sich hierbei um eine untere Wandung, eine seitliche Wandung oder eine obere Wandung (z. B. Deckel) des Gehäuses des Hochvoltspeichers handeln.

Nach einer Weiterbildung der Erfindung ist das Zellkontaktierungssystem zwischen den Notentgasungsöffnungen der Batteriezellen und der Wandung des Gehäuses des Hochvoltspeichers angeordnet.

Nach einer Weiterbildung der Erfindung weist das Zellkontaktierungssystem ein elektrisch leitendes, mit Elektroden mehrerer Batteriezellen elektrisch verbundenes Leitelement auf. Bei dem Leitelement kann es sich beispielsweise um ein Leitblech (z. B. Stahl oder Aluminiumblech) handeln. Es kann vorgesehen sein, dass das Leitelement von einem Halteelement getragen bzw. gehalten wird. Das Halteelement kann beispielsweise ein Kunststoffteil (z. B. ein Spritzgussteil) sein. Das Zellkontaktierungssystem im Sinne der vorliegenden Erfindung kann durch das Leitelement und/oder durch das Halteelement gebildet sein. Dementsprechend kann die Hitzeschutzschicht auf das Leitelement und/oder auf das Halteelement aufgebracht sein. In diesem Fall wirkt das Zellkontaktierungssystem beim Austritt heißen oder brennenden Gases aus einer oder mehreren Batteriezellen ähnlich wie ein "Prallblech", welches verhindert, dass heißes oder brennendes Gas unmittelbar auf das Material der Wandung des Gehäuses des Hochvoltspeichers auftrifft.

Nach einer Weiterbildung der Erfindung kann vorgesehen sein, dass es sich bei der Hitzeschutzschicht um eine intumeszierende Schicht handelt. Intumeszierende Materialien sind aus der Brandschutztechnik bekannt. Wenn ein intumeszierendes Material einer Flamme ausgesetzt wird, dehnt sich das Material signifikant aus bzw. schwillt an. Es kommt also zu einer Volumenzunahme des intumeszierenden Materials. Das Material schäumt bzw. bläht sich also auf und wird porös, wodurch sich seine Isolationswirkung und seine feuerhemmende Wirkung weiter erhöht.

Nach einer Weiterbildung der Erfindung kann vorgesehen sein, dass die an dem Zellkontaktierungssystem und/oder an der Wandung des Gehäuses des Hochvoltspeichers vorgesehene Hitzeschutzschicht eine Keramikschicht ist oder eine Schicht, die Keramikpartikel enthält.

Wie oben bereits erwähnt, kann vorgesehen, dass die Hitzeschutzschicht nur in denjenigen Bereichen, in denen Notentgasungsöffnungen angeordnet sind, an dem Zellkontaktierungssystem, vorzugsweise auch an der Wandung des Gehäuses des Hochvoltspeichers, vorgesehen ist. Es braucht also nicht notwendigerweise das gesamte Zellkontaktierungssystem bzw. nicht notwendigerweise die gesamte Wandung des Hochvoltspeichergehäuses mit einer derartigen Hitzeschutzschicht versehen sein. Vielmehr genügt eine "lokale Verstärkung" des Zellkontaktierungssystems bzw. der Wandung des Gehäuses des Hochvoltspeichers mit einer derartigen Hitzeschutzschicht.

Beispielsweise kann vorgesehen sein, dass die Hitzeschutzschicht eine Schichtdichte von mindestens 0,1 mm aufweist.

Die Wandung des Gehäuses des Hochvoltspeichers kann aus Aluminium bzw. einem Aluminiumblech bestehen, das zumindest oder ausschließlich in dem Bereich bzw. in denjenigen Bereichen, in denen die Notentgasungsöffnungen angeordnet sind, mit einer Hitzeschutzschicht versehen ist. Beispielsweise kann vorgesehen sein, dass die Notentgasungsöffnungen in Bezug auf die Richtung der Schwerkraft an einer Oberseite der Batteriezellgehäuse vorgesehen sind und dass die Hitzeschutzschicht an einer Innenseite bzw. einer Unterseite einer oberen Seite (Deckel) des Gehäuses des Hochvoltspeichers vorgesehen ist.

Die Wandung des Hochvoltspeichergehäuses muss aber nicht notwendigerweise aus Metall bzw. Aluminium bestehen. Prinzipiell kann die Wandung des Hochvoltspeichergehäuses teilweise oder ganz aus einem Kunststoffmaterial bestehen, welches zumindest in denjenigen Bereichen, in denen die Notentgasungsöffnungen der Batteriezellen angeordnet sind, mit einer Hitzeschutzschicht versehen ist, welche verhindert, dass in einem Extremfall die Wandung mit heißem bzw. brennendem Gas beaufschlagt ist.

Wie bereits erwähnt, kann vorgesehen sein, dass die Notentgasungsöffnungen bei ordnungsgemäßem Zustand der Batteriezellen gasdicht verschlossen sind und erst ab Überschreiten eines vorgegebenen Zellinnendrucks öffnen bzw. aufbrechen.

Wie bereits angedeutet, kann vorgesehen sein, dass die Hitzeschutzschicht auf der den Notentgasungsöffnungen zugewandten Seite der Wandung bzw. des Zellkontaktierungssystems vorgesehen ist.

Nach einer Weiterbildung der Erfindung besteht die Hitzeschutzschicht aus einem Material, das mindestens bis zu einer Temperatur von 1000°C oder 1100°C oder 1200°C oder 1300°C nicht oder für eine vorgegebene Zeitdauer nicht schmilzt und nicht verbrennt.

Beispielsweise kann vorgesehen sein, dass die Hitzeschutzschicht zumindest für eine Zeitdauer von 0,5 min und einer Temperatur von bis zu 2.000°C, insbesondere bis zu einer Temperatur von bis 1.600° durch heißes oder brennendes Gas, welches aus den Batteriezellen austritt, nicht durchlöchert bzw. verbrannt wird.

Im Folgenden wird die Erfindung im Zusammenhang mit der Zeichnung näher erläutert. Es zeigen:
- Figur 1: ein erstes Ausführungsbeispiel gemäß der Erfindung, bei der ein Hitzeschutzlack am Zellkontaktierungssystem vorgesehen ist; und
- Figur 2: ein zweites Ausführungsbeispiel, welches nicht Teil der Erfindung ist und bei dem ein Hitzeschutzlack an einer Innenseite eines Deckels des Hochvoltspeichergehäuses vorgesehen ist.

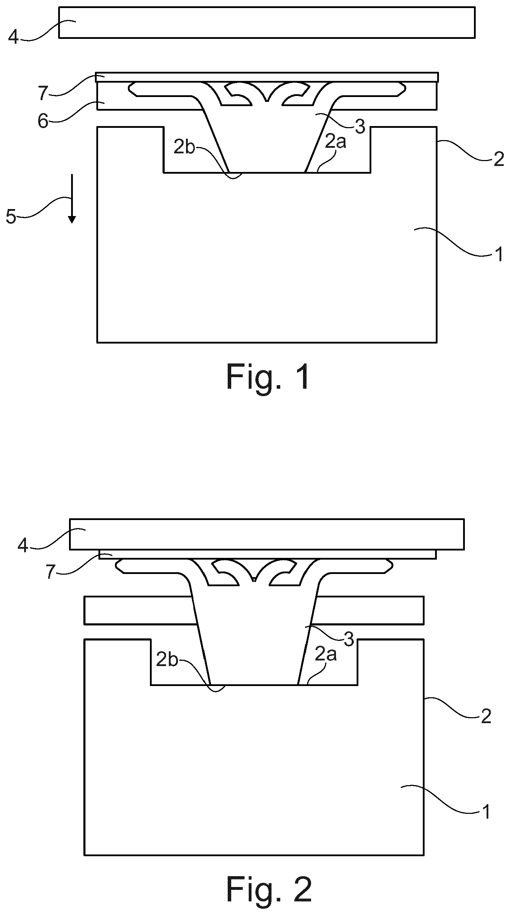

Figur 1 zeigt in stark schematisierter Darstellung eine Batteriezelle 1, die Teil eines aus mehreren solcher Batteriezellen bestehenden Zellmoduls (nicht dargestellt) ist. Die Batteriezelle 1 weist ein Batteriezellgehäuse 2 auf. In einem oberen Bereich 2a des Batteriezellengehäuses 2 ist eine Notentgasungsöffnung 2b vorgesehen. Bei ordnungsgemäßem Zustand der Batteriezelle 1 ist die Notentgasungsöffnung 2b verschlossen. Die Notentgasungsöffnung 2b öffnet bzw. bricht erst bei Überschreiten eines vorgegebenen Drucks im Inneren des Batteriezellgehäuses 2. Bei einer extremen mechanischen Beschädigung des Batteriezellgehäuses 2 bzw. bei einem Kurzschluss in der Batteriezelle oder zwischen einzelnen Batteriezellen kann es im Inneren des Batteriezellgehäuses zu einem erheblichen Druckanstieg und zum Ausstritt heißer oder brennender Gase über die Notentgasungsöffnung 2 kommen. Heißes bzw. brennendes Gas ist in der Figuren 1, 2 durch das Bezugszeichen 3 angedeutet.

Die Batteriezelle 1 bzw. das hier nicht näher dargestellte Zellmodul ist in einem hier nicht näher dargestellten Gehäuse eines Hochvoltspeichers angeordnet. Von dem Gehäuse des Hochvoltspeichers ist hier lediglich ein Deckel 4 dargestellt. Der Deckel 4 befindet sich in Bezug auf die Richtung der Schwerkraft, die durch einen Pfeil 5 angedeutet ist, in einem oberen Bereich des Gehäuses des Hochvoltspeichers. Zwischen dem Deckel 4 und dem Batteriezellgehäuse 2 ist ein hier nur äußerst schematisch dargestelltes Zellkontaktierungssystem 6 angeordnet. Über das Zellkontaktierungssystem 6 sind einzelne Pole (gleichnamige Pole oder ungleichnamige Pole) einzelner Batteriezellen eines Zellmoduls elektrisch miteinander verbunden bzw. verschaltet. Das Zellkontaktierungssystem weist in jedem Fall ein Leitelement auf, das z. B. durch ein Leitblech gebildet sein kann, über das die Pole der einzelnen Batteriezellen des Zellmoduls elektrisch miteinander verbunden sind. Zusätzlich kann vorgesehen sein, das das Zellkontaktierungssystem ein das Leitelement haltendes bzw. tragendes Halteelement aufweist, das z. B. aus einem Kunststoffmaterial bestehen kann. Bei dem in Figur 1 gezeigten Ausführungsbeispiel ist an einer Oberseite des Zellkontaktierungssystems 6, z. B an dem Halteelement oder einer Abdeckung des Zellkontaktierungssystems, ein Hitzeschutzlack 7 vorgesehen. Der Hitzeschutzlack muss nicht notwendigerweise an einer der Batteriezelle 1 bzw. an einer den Batteriezellen des Zellmoduls abgewandten Seite vorgesehen sein. Der Hitzeschutzlack kann alternativ oder zusätzlich auch an einer der Batteriezelle 1 bzw. den Batteriezellen des Zellmoduls zugewandten Seite des Zellkontaktierungssystems 6 vorgesehen sein, d. h. auf derjenigen Seite des Zellkontaktierungssystems 6, die der Notentgasungsöffnung 2b zugewandt ist.

Durch das Zellkontaktierungssystems 6 und insbesondere auch durch die Hitzeschutzschicht 7 wird zumindest für eine vorgegebene Zeitdauer verhindert, dass heißes bzw. brennendes Gas 3, welches aus der Notentgasungsöffnung 2 austritt, unmittelbar auf die Innenseite bzw. Unterseite des Deckels 4 des Gehäuses des Hochvoltspeichers auftrifft.

Das Zellkontaktierungssystem 6 bzw. der daran vorgesehene Hitzeschutzlack bzw. die Hitzeschutzschicht 7 wirkt also als eine Art Prallschicht, wodurch sich die Gefahr, dass sich heißes oder brennendes Gas durch die Wandung des Hochvoltspeichergehäuses bzw. durch den Deckel 4 hindurchbrennt, deutlich verringert wird.

Bei dem in Figur 2 gezeigten Ausführungsbeispiel ist die Hitzeschutzschicht 7 an einer Innenseite der Wandung des Gehäuses des Hochvoltspeichers bzw. hier konkret an einer Innenseite bzw. Unterseite des Deckels 4 des Gehäuses des Hochvoltspeichers vorgesehen.

## Patentansprüche

1. Fahrzeug mit einem Hochvoltspeicher, der
ein Gehäuse aufweist, in welchem mindestens ein Batteriemodul angeordnet ist, das mehrere über ein Zellkontaktierungssystem (6) elektrisch miteinander verbundene Batteriezellen (1) aufweist, wobei die Batteriezellen (1) jeweils ein Batteriezellgehäuse (2) mit einer sich ab einem vorgegebenen Zellinnendruck öffnenden Notentgasungsöffnung (2b) aufweisen, durch die bei einer Störung oder Beschädigung einzelner Batteriezellen (1) heißes oder brennendes Gas (3) aus dem Inneren des Batteriezellgehäuses (2) in das Gehäuse des Hochvoltspeichers entweichen kann, wobei die Notentgasungsöffnungen (2b) dem Zellkontaktierungssystem (6) zugewandt sind,
**dadurch gekennzeichnet, dass** das Zellkontaktierungssystem (6) zumindest in denjenigen Bereichen, in denen die Notentgasungsöffnungen (2a) angeordnet sind, mit einer Hitzeschutzschicht (7), insbesondere mit einer Hitzeschutzlackschicht (7), versehen ist.

2. Fahrzeug nach Anspruch 1, **dadurch gekennzeichnet, dass** die Notentgasungsöffnungen (2a) zusätzlich einer Wandung (4) des Gehäuses des Hochvoltspeichers zugewandt sind und zusätzlich die Wandung (4) des Gehäuses des Hochvoltspeichers zumindest in denjenigen Bereichen, in denen die Notentgasungsöffnungen (2a) angeordnet sind, mit einer Hitzeschutzschicht (7), insbesondere mit einer Hitzeschutzlackschicht (7), versehen ist.

3. Fahrzeug nach Anspruch 2, **dadurch gekennzeichnet, dass** das Zellkontaktierungssystem (6) zwischen den Notentgasungsöffnungen (2b) und der Wandung (4) angeordnet ist.

4. Fahrzeug nach einem der Ansprüche 1 bis 3, **dadurch gekennzeichnet, dass** das Zellkontaktierungssystem (6) ein elektrisch leitendes, mit Elektroden mehrerer Batteriezellen (1) elektrisch verbundenes Leitelement und/oder ein das Leitelement tragendes Halteelement aufweist, wobei die Hitzeschutzschicht (7) auf das Leitelement und/oder auf das Halteelement aufgebracht ist.

5. Fahrzeug nach einem der Ansprüche 1 bis 4, **dadurch gekennzeichnet, dass** es sich bei der Hitzeschutzschicht (7) um eine intumeszierende Schicht handelt.

6. Fahrzeug nach einem der Ansprüche 1 bis 5, **dadurch gekennzeichnet, dass** die Hitzeschutzschicht (7) eine Keramikschicht oder eine Keramikpartikel enthaltende Schicht ist.

7. Fahrzeug nach einem der Ansprüche 1 bis 6, **dadurch gekennzeichnet, dass** die Hitzeschutzschicht (7) eine Schichtdicke von mindestens 0,1 mm aufweist.

8. Fahrzeug nach einem der Ansprüche 1 bis 7, **dadurch gekennzeichnet, dass** die Wandung (4) aus Aluminiumblech besteht, welches in dem Bereich oder in denjenigen Bereichen, in denen die Notentgasungsöffnungen (2b) angeordnet sind, mit einer Hitzeschutzschicht (7) versehen ist.

9. Fahrzeug nach einem der Ansprüche 1 bis 8, **dadurch gekennzeichnet, dass** die Wandung (4) aus einem Kunststoffmaterial besteht, welches in dem Bereich oder in denjenigen Bereichen, in denen die Notentgasungsöffnungen (2b) angeordnet, mit einer Hitzeschutzschicht (7) versehen ist.

10. Fahrzeug nach einem der Ansprüche 1 bis 9, **dadurch gekennzeichnet, dass** die Notentgasungsöffnungen (2b) bei ordnungsgemäßem Zustand der Batteriezellen (1) gasdicht verschlossen sind.

11. Fahrzeug nach einem der Ansprüche 1 bis 10, **dadurch gekennzeichnet, dass** die Notentgasungsöffnungen (2b) jeweils durch eine Sollbruchstelle gebildet sind, die bei Überschreiten eines vorgegebenen Drucks im Inneren des betreffenden Batteriezellgehäuses (2) öffnen.

12. Fahrzeug nach einem der Ansprüche 1 bis 11, **dadurch gekennzeichnet, dass** die Batteriezellen (1) so angeordnet sind, dass die Notentgasungsöffnungen (2b) in Bezug auf die Richtung (5) der Schwerkraft einer oberen Wandung (4) oder einem Deckel des Hochvoltspeichers zugewandt sind.

13. Fahrzeug nach einem der Ansprüche 1 bis 12, **dadurch gekennzeichnet, dass** die Hitzeschutzschicht (7) auf einer den Notentgasungsöffnungen (2b) zugewandten Seite der Wandung (4) vorgesehen ist.

14. Fahrzeug nach einem der Ansprüche 1 bis 13, **dadurch gekennzeichnet, dass** die Hitzeschutzschicht (7) bis zu einer Temperatur von 1.000°C oder 1.100°C oder 1.200°C oder 1.300°C nicht schmilzt und nicht verbrennt.

15. Fahrzeug nach einem der Ansprüche 1 bis 14, **dadurch gekennzeichnet, dass** die Hitzeschutzschicht (7) für eine Zeitdauer von 0,5 Minuten bei einer Temperatur von bis zu 2.000°C, insbesondere bei einer Temperatur von bis zu 1.600°C, durchaus den Batteriezellen (1) austretendes heißes oder brennendes Gas nicht durchlöchert und nicht verbrannt wird.

## Claims

1. Vehicle with a high-voltage storage device, which has a housing in which at least one battery module is arranged, which has several battery cells (1) electrically connected to each other via a cell contacting system (6), wherein the battery cells (1) each have a battery cell housing (2) with an emergency degassing opening (2b) that opens at a predetermined internal cell pressure, through which hot or burning gas (3) can escape from the interior of the battery cell housing (2) into the housing of the high-voltage storage device in the event of a malfunction or damage to individual battery cells (1), wherein the emergency degassing openings (2b) face the cell contacting system (6),
**characterized in that** the cell contacting system (6) is provided with a heat protection layer (7), in particular with a heat protection coating layer (7), at least in those areas where the emergency degassing openings (2a) are arranged.

2. Vehicle according to claim 1, **characterized in that** the emergency degassing openings (2a) additionally face a wall (4) of the housing of the high-voltage storage device and additionally the wall (4) of the housing of the high-voltage storage device is provided with a heat protection layer (7), in particular with a heat protection coating layer (7), at least in those areas where the emergency degassing openings (2a) are arranged.

3. Vehicle according to claim 2, **characterized in that** the cell contacting system (6) is arranged between the emergency degassing openings (2b) and the wall (4).

4. Vehicle according to any one of claims 1 to 3, **characterized in that** the cell contacting system (6) has an electrically conductive conductor element electrically connected to electrodes of several battery cells (1) and/or a holding element carrying the conductor element, wherein the heat protection layer (7) is applied to the conductor element and/or to the holding element.

5. Vehicle according to any one of claims 1 to 4, **characterized in that** the heat protection layer (7) is an intumescent layer.

6. Vehicle according to any one of claims 1 to 5, **characterized in that** the heat protection layer (7) is a ceramic layer or a layer containing ceramic particles.

7. Vehicle according to any one of claims 1 to 6, **characterized in that** the heat protection layer (7) has a layer thickness of at least 0.1 mm.

8. Vehicle according to any one of claims 1 to 7, **characterized in that** the wall (4) consists of aluminum sheet which is provided with a heat protection layer (7) in the area or in those areas where the emergency degassing openings (2b) are arranged.

9. Vehicle according to any one of claims 1 to 8, **characterized in that** the wall (4) consists of a plastic material which is provided with a heat protection layer (7) in the area or in those areas where the emergency degassing openings (2b) are arranged.

10. Vehicle according to any one of claims 1 to 9, **characterized in that** the emergency degassing openings (2b) are gas-tight sealed when the battery cells (1) are in proper condition.

11. Vehicle according to any one of claims 1 to 10, **characterized in that** the emergency degassing openings (2b) are each formed by a predetermined breaking point that opens when a predetermined pressure inside the respective battery cell housing (2) is exceeded.

12. Vehicle according to any one of claims 1 to 11, **characterized in that** the battery cells (1) are arranged such that the emergency degassing openings (2b) face an upper wall (4) or a cover of the high-voltage storage device with respect to the direction (5) of gravity.

13. Vehicle according to any one of claims 1 to 12, **characterized in that** the heat protection layer (7) is provided on a side of the wall (4) facing the emergency degassing openings (2b).

14. Vehicle according to any one of claims 1 to 13, **characterized in that** the heat protection layer (7) does not melt and does not burn up to a temperature of 1,000°C or 1,100°C or 1,200°C or 1,300°C.

15. Vehicle according to any one of claims 1 to 14, **characterized in that** the heat protection layer (7) is not perforated and not burned by hot or burning gas escaping from the battery cells (1) for a duration of 0.5 minutes at a temperature of up to 2,000°C, in particular at a temperature of up to 1,600°C.

## Revendications

1. Véhicule avec un dispositif de stockage haute tension, qui comprend un boîtier dans lequel est disposé au moins un module de batterie, qui comprend plusieurs cellules de batterie (1) reliées électriquement entre elles par un système de contact de cellules (6), dans lequel les cellules de batterie (1) comprennent chacune un boîtier de cellule de batterie (2) avec une ouverture de dégazage d'urgence (2b) s'ouvrant à partir d'une pression interne de cellule prédéterminée, par laquelle, en cas de dysfonctionnement ou d'endommagement de cellules de batterie (1) individuelles, du gaz chaud ou brûlant (3) peut s'échapper de l'intérieur du boîtier de cellule de batterie (2) dans le boîtier du dispositif de stockage haute tension, les ouvertures de dégazage d'urgence (2b) étant orientées vers le système de contact de cellules (6), **caractérisé en ce que** le système de contact de cellules (6) est pourvu d'une couche de protection thermique (7), en particulier d'une couche de revêtement de protection thermique (7), au moins dans les zones où sont disposées les ouvertures de dégazage d'urgence (2a).

2. Véhicule selon la revendication 1, **caractérisé en ce que** les ouvertures de dégazage d'urgence (2a) sont en outre orientées vers une paroi (4) du boîtier du dispositif de stockage haute tension et **en ce que** la paroi (4) du boîtier du dispositif de stockage haute tension est en outre pourvue d'une couche de protection thermique (7), en particulier d'une couche de revêtement de protection thermique (7), au moins dans les zones où sont disposées les ouvertures de dégazage d'urgence (2a).

3. Véhicule selon la revendication 2, **caractérisé en ce que** le système de contact de cellules (6) est disposé entre les ouvertures de dégazage d'urgence (2b) et la paroi (4).

4. Véhicule selon l'une quelconque des revendications 1 à 3, **caractérisé en ce que** le système de contact de cellules (6) comprend un élément conducteur électriquement conducteur relié électriquement à des électrodes de plusieurs cellules de batterie (1) et/ou un élément de support portant l'élément conducteur, la couche de protection thermique (7) étant appliquée sur l'élément conducteur et/ou sur l'élément de support.

5. Véhicule selon l'une quelconque des revendications 1 à 4, **caractérisé en ce que** la couche de protection thermique (7) est une couche intumescente.

6. Véhicule selon l'une quelconque des revendications 1 à 5, **caractérisé en ce que** la couche de protection thermique (7) est une couche céramique ou une couche contenant des particules céramiques.

7. Véhicule selon l'une quelconque des revendications 1 à 6, **caractérisé en ce que** la couche de protection thermique (7) a une épaisseur d'au moins 0,1 mm.

8. Véhicule selon l'une quelconque des revendications 1 à 7, **caractérisé en ce que** la paroi (4) est constituée d'une tôle d'aluminium qui est pourvue d'une couche de protection thermique (7) dans la zone ou dans les zones où sont disposées les ouvertures de dégazage d'urgence (2b).

9. Véhicule selon l'une quelconque des revendications 1 à 8, **caractérisé en ce que** la paroi (4) est constituée d'un matériau plastique qui est pourvu d'une couche de protection thermique (7) dans la zone ou dans les zones où sont disposées les ouvertures de dégazage d'urgence (2b).

10. Véhicule selon l'une quelconque des revendications 1 à 9, **caractérisé en ce que** les ouvertures de dégazage d'urgence (2b) sont fermées de manière étanche aux gaz lorsque les cellules de batterie (1) sont en bon état.

11. Véhicule selon l'une quelconque des revendications 1 à 10, **caractérisé en ce que** les ouvertures de dégazage d'urgence (2b) sont chacune formées par un point de rupture prédéterminé qui s'ouvre lorsqu'une pression prédéterminée à l'intérieur du boîtier de cellule de batterie (2) respectif est dépassée.

12. Véhicule selon l'une quelconque des revendications 1 à 11, **caractérisé en ce que** les cellules de batterie (1) sont disposées de telle sorte que les ouvertures de dégazage d'urgence (2b) sont orientées vers une paroi supérieure (4) ou un couvercle du dispositif de stockage haute tension par rapport à la direction (5) de la gravité.

13. Véhicule selon l'une quelconque des revendications 1 à 12, **caractérisé en ce que** la couche de protection thermique (7) est prévue sur un côté de la paroi (4) orienté vers les ouvertures de dégazage d'urgence (2b).

14. Véhicule selon l'une quelconque des revendications 1 à 13, **caractérisé en ce que** la couche de protection thermique (7) ne fond pas et ne brûle pas jusqu'à une température de 1 000°C ou 1 100°C ou 1 200°C ou 1 300°C.

15. Véhicule selon l'une quelconque des revendications 1 à 14, **caractérisé en ce que** la couche de protection thermique (7) n'est pas perforée et n'est pas brûlée par le gaz chaud ou brûlant s'échappant des cellules de batterie (1) pendant une durée de 0,5 minute à une température allant jusqu'à 2 000°C, en particulier à une température allant jusqu'à 1 600°C.
